# EUROPEAN PATENT APPLICATION

(11) **EP 4 807 592 A1**
(43) Date of publication of application: **16.09.2026**
(21) Application number: 25305325.0
(22) Date of filing: 12.03.2025
(51) Int. Cl.: G06F 21/34, H04L 9/40, H04L 67/08

(54) **SYSTEM, DEVICE AND METHOD FOR VIRTUAL SMART CARD USAGE IN REMOTE DESKTOP PROTOCOL (RDP) ENVIRONMENTS**

(71) Applicant: THALES DIS FRANCE SAS, 92190 Meudon (FR); THALES DIS CPL USA, INC., Austin, TX 78759 (US)
(72) Inventor: KANT, Abhinav, 201301 Noida (IN); IDRASSI, Mounir, 13705 La Ciotat (FR); TOMAR, Sumit, 201301 Noida (IN); SHRIVASTAV, Nikhil Kumar, 201301 Noida (IN)
(74) Representative: Grevin, Emmanuel

(57) **Abstract**

A smart card management (SCM) system 100 enabling usage of one or more smart cards over a remote desktop protocol (RDP) session, in accordance with an example embodiment. The system 100 may be communicatively coupled with a remote identity provider device 102 and a card emulator device 104 via a communication network 108. The card emulator 110 is configured to receive a request from the one or more applications to access the one or more smart cards, the request is received in the form of application protocol data units (APDUs), translate the received APDUs to custom logic associated with one or more smart cards, and host and manage instances associated with the one or more smart cards based on the custom logic to thereby enable the usage of the one or more smart cards over the remote desktop protocol (RDP) session. The instances are managed through one or more card model plugins.

## Description

### FIELD OF THE INVENTION

The present disclosure relates to the field of secure digital authentication and cryptographic operations, particularly systems, devices and methods for enabling and manging the use of virtual smart cards in remote desktop environments for Public Key Infrastructure (PKI) applications, integrating middleware solutions, and addressing secure communication over Remote Desktop Protocol (RDP).

### BACKGROUND OF THE INVENTION

Traditional smart card systems in Windows environments often face limitations when accessed via Remote Desktop Protocol (RDP). Specifically, local smart card resources, whether physical or virtual, cannot be utilized seamlessly by applications on the remote server. This limitation hampers operations like encryption, signing, and authentication reliant on Public Key Infrastructure (PKI) using smart cards.

A key limitation arises from the way RDP sessions handle smart card resources. Windows operating systems restrict access to smart cards connected to the remote server during an RDP session, allowing only smart cards on the client side to be utilized. This creates significant challenges for users who need to access keys and certificates stored on smart cards physically attached to the remote server. Such restrictions hinder the deployment of secure authentication and cryptographic operations in remote environments, making it difficult to implement robust PKI systems.

Furthermore, current solutions that attempt to use virtual smart cards in RDP environments are often inadequate. Virtual smart cards are typically implemented using virtual smart reader devices that mimic physical card readers. These virtual readers interact with the Windows PC/SC layer, which is responsible for managing smart card communication. However, the PC/SC layer does not adequately support virtual readers in RDP sessions, causing the virtual smart card functionality to fail under these conditions. As a result, users are unable to rely on virtual smart cards for secure operations over RDP.

This limitation has a direct impact on organizations that depend on virtual smart cards for secure remote access. For instance, virtual smart card solutions often rely on middleware to integrate with PKI applications. When used in RDP environments, these solutions face interoperability issues because the underlying Windows infrastructure does not support the virtual reader devices necessary for the middleware to function. Consequently, users are forced to find alternative, less secure methods for remote authentication and cryptographic operations.

Additionally, existing solutions fail to decouple smart card functionality from the underlying hardware, further exacerbating the problem. Most virtual smart card implementations are tightly coupled with specific hardware or software configurations, limiting their adaptability to diverse environments. This lack of flexibility prevents organizations from adopting virtual smart card solutions that could otherwise enhance security posture in remote access scenarios.

In summary, the inability to utilize local and remote smart card resources seamlessly over RDP sessions poses a critical barrier to secure PKI operations. Current systems fail to provide a robust and flexible solution for integrating virtual smart cards in remote desktop environments, leaving a significant gap in the field. Addressing these challenges requires solution that overcomes the limitations of the Windows PC/SC layer and enables seamless, secure communication between applications and smart cards in RDP environments.

### SUMMARY

The following embodiments present a simplified summary in order to provide a basic understanding of some aspects of the disclosed invention. This summary is not an extensive overview, and it is not intended to identify key/critical elements or to delineate the scope thereof. Its sole purpose is to present some concepts in a simplified form as a prelude to the more detailed description that is presented later.

The disclosed invention provides a comprehensive solution for enabling the usage of smart cards in remote desktop protocol (RDP) sessions through a Smart Card Management (SCM) system. The SCM system incorporates a remote identity provider device, a card emulator device, and an intermediary mechanism to bridge communication between user applications and smart cards. By leveraging a custom Winscard.dll file and card emulator services, the invention provides seamless integration of both physical and virtual smart cards in RDP environments.

The SCM system begins by authenticating the user through a remote identity provider device, generating an access token that facilitates secure operations during the RDP session. A card emulator device, implemented as a Windows service, receives requests in the form of Application Protocol Data Units (APDUs) from applications, translates them to custom logic associated with the smart cards, and manages card instances using card model plugins. The users can utilize smart card functionalities such as encryption, signing, and authentication over RDP sessions.

The intermediary mechanism, which can be implemented as a custom Winscard.dll file or Data Definition Language (DDL) file, manages communication between user applications and the card emulator. By merging virtual and physical smart card reader lists, the intermediary mechanism ensures transparent interaction for applications, overcoming the limitations of the Windows PC/SC layer in RDP environments.

A significant aspect of the invention is the secure communication channel between the card emulator and a remote Hardware Security Module (HSM) server. Utilizing an Inter-Process Communication (IPC) protocol, the system validates the user's identity and access token with the HSM server to perform cryptographic operations, retrieve keys and certificates, and update metadata securely. This approach ensures robust security while enabling seamless remote access to smart card resources.

Moreover, the modular design of the card emulator device allows the emulation of diverse smart card models through card model plugins, providing flexibility and adaptability across various use cases. By supporting both physical and virtual smart cards, the invention offers a versatile and scalable solution for organizations relying on PKI systems in remote environments.

In summary, the invention bridges critical gaps in existing smart card systems by enabling secure, flexible, and seamless usage of smart cards over RDP sessions. The invention enhances compatibility with existing PKI middleware and applications, offering a robust framework for secure remote authentication and cryptographic operations.

Some example embodiments disclosed herein provide a smart card management (SCM) system to enable usage of one or more smart cards over a remote desktop protocol (RDP) session. The system comprises a remote identity provider device (102) configured to authenticate a user, and to generate an access token for secure operations to be performed by the user during the remote desktop protocol (RDP) session. The system further comprises a card emulator device communicably coupled to the remote identity provider device. The user accesses the card emulator device during the remote desktop protocol (RDP) session. The card emulator device having an intermediary mechanism configured to manage a communication between one or more applications and the one or more smart cards present in the card emulator device, and a card emulator communicably coupled with the intermediary mechanism. The card emulator is configured to receive a request from the one or more applications to access the one or more smart cards, wherein the request is received in the form of application protocol data units (APDUs). Further , the card emulator is configured to translate the received APDUs to custom logic associated with one or more smart cards. The card emulator is configured to host and manage instances associated with the one or more smart cards based on the custom logic to thereby enable the usage of the one or more smart cards over the remote desktop protocol (RDP) session, wherein the instances are managed through one or more card model plugins.

According to some example embodiments, the intermediary mechanism is a data definition language (DDL) file, or a custom Winscard.dll file.

According to some example embodiments, the card emulator is implemented as a windows service.

According to some example embodiments, the one or more applications are being accessed by the user remotely over the RDP.

According to some example embodiments, the one or more smart cards are selected from any or a combination of a physical card or a virtual smart card.

According to some example embodiments, the card emulator communicates securely with a remote hardware security module (HSM) server using an Inter-Process Communication (IPC) protocol to authenticate an identity of the user and the access token, to thereby, upon authentication, enable the usage of the one or more smart cards over the remote desktop protocol (RDP) session.

Some example embodiments disclosed herein provide a card emulator device to enable usage of one or more smart cards over a remote desktop protocol (RDP) session. The device comprises a memory for storing one or more instructions for emulating one or more functionalities associated with the one or more smart cards. The card emulator device having a processor communicably coupled with the memory. The processor is configured to execute card emulator services. The processor is configured to receive a request from one or more applications to access the one or more stored smart cards wherein the request is received in the form of application protocol data units (APDUs). Further, the processor is configured to translate the received APDUs to custom logic associated with one or more smart cards. The processor is configured to manage instances associated with the one or more smart cards based on the custom logic to thereby enable the usage of the one or more smart cards over the remote desktop protocol (RDP) session, wherein the instances are managed through one or more card model plugins.

According to some example embodiments, the processor is further configured to communicate with a remote identity provider device, the remote identity provider device is configured to authenticate a user. The processor is configured to generate an access token for secure operations to be performed by the user during the remote desktop protocol (RDP) session. The processor is further configured to communicate securely with a remote hardware security module (HSM) server using an Inter-Process Communication (IPC) protocol to authenticate an identity of the user and the access token, to thereby, upon authentication, enable the usage of the one or more smart cards over the remote desktop protocol (RDP) session.

According to some example embodiments, the processor is communicably coupled to an intermediary mechanism, the intermediary mechanism is configured to manage communication between the one or more applications and the one or more smart cards.

According to some example embodiments, the intermediary mechanism is a data definition language (DDL) file, or a custom Winscard.dll file.

According to some example embodiments, the card emulator is implemented as a windows service.

According to some example embodiments, the one or more smart cards are selected from any or a combination of a physical card or a virtual smart card.

Some example embodiments disclosed herein provide a method for for enabling usage of one or more smart cards over a remote desktop protocol (RDP) session. The method comprises authenticating a user attempting to access a card emulator device remotely. The method comprises generating, upon the authentication, an access token for secure operations to be performed by the user during the remote desktop protocol (RDP) session while accessing the card emulator device. The method further comprises managing a communication between one or more applications and the one or more smart cards present in the card emulator device,. The method comprises receiving a request from the one or more applications to access the one or more smart cards, the request is received in the form of application protocol data units (APDUs). Also, the method comprises translating the received APDUs to custom logic associated with one or more smart cards. The method also comprises hosting and managing instances associated with the one or more smart cards based on the custom logic to thereby enable the usage of the one or more smart cards over the remote desktop protocol (RDP) session, wherein the instances are managed through one or more card model plugins.

According to some example embodiments, the method comprises communicating with a remote identity provider device, the remote identity provider device is configured to authenticate a user, and to generate an access token for secure operations to be performed by the user during the remote desktop protocol (RDP) session.

According to some example embodiments, Further , the method comprises communicating securely with a remote hardware security module (HSM) server using an Inter-Process Communication (IPC) protocol to authenticate an identity of the user and the access token, to thereby, upon authentication, enable the usage of the one or more smart cards over the remote desktop protocol (RDP) session

According to some example embodiments, the intermediary mechanism is a data definition language (DDL) file, or a custom Winscard.dll file.

According to some example embodiments, the card emulator is implemented as a windows service.

According to some example embodiments, the one or more smart cards are selected from any or a combination of a physical card or a virtual smart card.

### DEFINITIONS

The term "RDP" refers to Remote Desktop Protocol (RDP) is a proprietary protocol developed by Microsoft Corporation which provides a user with a graphical interface to connect to another computer over a network connection. The user employs RDP client software for this purpose, while the other computer must run RDP server software.

The term "Winscard.dll" refers to a dynamic link library (DLL) that provides access to smart card and reader functions. DLLs are helper files that other programs can use to access their tools and features. In the context of the present invention, it provides the same entry points as the OS winscard.dll and provides full PC/SC functionality, making it transparent for applications to use it instead of Windows' built-in winscard.dll.

The term "card emulator" refers to a tool that allows a user to emulate a smart card, either on user's phone or computer.

The term "card model plugin" is a shared library that implements the logic of a specific smart card model so that it can be emulated by the Card Emulator.

### BRIEF DESCRIPTION OF DRAWINGS

The above and still further example embodiments of the present disclosure will become apparent upon consideration of the following detailed description of embodiments thereof, especially when taken in conjunction with the accompanying drawings, and wherein:
FIG. 1 illustrates a block diagram of an environment of a smart card management (SCM) system to enable usage of one or more smart cards over a remote desktop protocol (RDP) session, in accordance with an example embodiment.
FIG. 2 illustrates a block diagram of a card emulator device to enable usage of one or more smart cards over a remote desktop protocol (RDP) session, in accordance with an example embodiment.
FIG. 3 illustrates a flow diagram of a method method for enabling usage of one or more smart cards over a remote desktop protocol (RDP) session, in accordance with an example embodiment.
FIG. 4 illustrates an exemplary integration between identity providers for user authentication, and remote HSM servers for cryptographic operations, in accordance with an example embodiment.
FIG. 5A and 5B (continuation of FIG. 5A) illustrate an exemplary real-world application scenario, such as, using a virtual smart card for signing documents in Acrobat, and performing secure authentication in a browser, in accordance with an example embodiment.

The figures illustrate embodiments of the invention for purposes of illustration only. One skilled in the art will readily recognize from the following description that alternative embodiments of the structures and methods illustrated herein may be employed without departing from the principles of the invention described herein.

### DETAILED DESCRIPTION

In the following description, for purposes of explanation, numerous specific details are set forth in order to provide a thorough understanding of the present disclosure. It will be apparent, however, to one skilled in the art that the present disclosure can be practiced without these specific details. In other instances, systems, apparatuses, and methods are shown in block diagram form only in order to avoid obscuring the present disclosure.

Reference in this specification to "one embodiment" or "an embodiment" or "example embodiment" means that a particular feature, structure, or characteristic described in connection with the embodiment is present in at least one embodiment of the present disclosure. The appearance of the phrase "in one embodiment" in various places in the specification are not necessarily all referring to the same embodiment, nor are separate or alternative embodiments mutually exclusive of other embodiments. Further, the terms "a" and "an" herein do not denote a limitation of quantity, but rather denote the presence of at least one of the referenced items. Moreover, various features are described which may be exhibited by some embodiments and not by others. Similarly, various requirements are described which may be requirements for some embodiments but not for other embodiments.

Some embodiments of the present disclosure will now be described more fully hereinafter with reference to the accompanying drawings, in which some, but not all, embodiments of the invention are shown. Indeed, various embodiments of the invention may be embodied in many different forms and should not be construed as limited to the embodiments set forth herein, rather, these embodiments are provided so that this disclosure will satisfy applicable legal requirements. Like reference numerals refer to like elements throughout.

The terms "comprise", "comprising", or any other variations thereof, are intended to cover a non-exclusive inclusion, such that a setup, device, or method that comprises a list of components or steps does not have only those components or steps but may have other components or steps not expressly listed or inherent to such setup, device, or method. In other words, one or more elements in a system or apparatus proceeded by "comprises... a" does not, without more constraints, preclude the existence of other elements or additional elements in the system or method.

The embodiments are described herein for illustrative purposes and are subject to many variations. It is understood that various omissions and substitutions of equivalents are contemplated as circumstances may suggest or render expedient but are intended to cover the application or implementation without departing from the spirit or the scope of the present disclosure. Further, it is to be understood that the phraseology and terminology employed herein are for the purpose of the description and should not be regarded as limiting. Any heading utilized within this description is for convenience only and has no legal or limiting effect.

The present invention addresses a critical limitation in the Windows operating system where smart card resources, whether physical or virtual, are inaccessible during Remote Desktop Protocol (RDP) sessions. This restriction prevents the use of virtual smart cards attached to remote servers, undermining the functionality of systems that rely on smart cards for secure key management and authentication. The proposed solution innovatively bridges this gap, enabling the seamless use of virtual smart cards in such environments, ensuring secure and flexible access to keys and certificates.

The invention is a custom implementation of the Winscard.dll, a critical component in Windows for managing smart card communication. By replacing the default Winscard.dll with a customized version, the system intercepts and modifies the way smart card-related operations are handled. This custom library not only mimics the behavior of the original Winscard.dll but also introduces support for virtual smart card readers, enabling applications to interact with these virtual devices transparently, even during RDP sessions.

The invention incorporates a Card Emulator, implemented as a Windows service, which acts as the engine for creating and managing virtual smart card instances. The Card Emulator works in tandem with the custom Winscard.dll, ensuring that applications can send Application Protocol Data Units (APDUs) and receive appropriate responses, just as they would with a physical smart card. The Card Emulator is responsible for instantiating virtual cards based on user requirements and interfacing with a Remote Hardware Security Module (HSM) server for cryptographic operations and metadata management.

To enhance modularity and scalability, the invention employs Card Model Plugins, which encapsulate the logic for specific smart card types. These plugins allow the Card Emulator to emulate various card functionalities by mapping the virtual card's file system and data to token metadata retrieved from the Remote HSM. This modular approach enables the system to support diverse virtual card models without altering its core architecture.

The system ensures robust security and interoperability by integrating with Identity Providers like Azure or Okta. These providers authenticate users and issue access tokens, which the Management Application uses to interact with the Card Emulator and Remote HSM. This integration ensures that only authorized users can access and operate virtual smart cards, safeguarding sensitive cryptographic keys and operations.

The Management Application, running on the user's Windows machine, serves as the user interface for managing virtual cards. Further, the Management Application communicates securely with the Card Emulator via Inter-Process Communication (IPC) to perform administrative tasks such as creating, deleting, or connecting virtual cards. This application leverages the user's identity and access token to authenticate and authorize operations on the virtual cards, ensuring compliance with security policies.

Applications and middleware, such as Public Key Infrastructure (PKI) tools and cryptographic libraries, can seamlessly integrate with this solution. By routing smart card operations through the custom Winscard.dll, the tools remain unaware of the underlying virtualization, and preserving their functionality during RDP sessions. The transparency extends to user applications like browsers or document management tools, which rely on smart cards for tasks such as mutual authentication or digital signatures.

Overall, the invention revolutionizes the use of virtual smart cards in Windows environments, particularly under RDP constraints. By combining a custom Winscard.dll, a Card Emulator service, and integration with identity and HSM services, ensures secure, scalable, and transparent smart card operations. The mentioned approach not only overcomes a critical system limitation but also enhances flexibility and security in remote access scenarios, proving invaluable for enterprises relying on robust key management and authentication solutions.

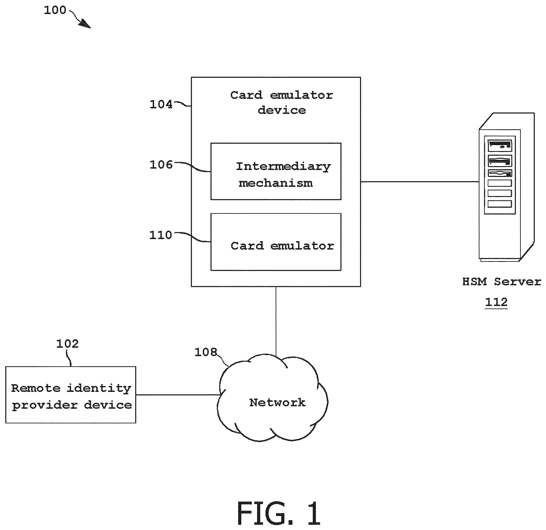

Embodiments of the present disclosure may provide a method and a system for enabling usage of one or more smart cards over a remote desktop protocol (RDP) session. The method and the system for such enabling are described with reference to FIG. 1 to FIG. 5A-5B as detailed below.

FIG. 1 illustrates a block diagram of an environment of a smart card management (SCM) system 100 enabling usage of one or more smart cards over a remote desktop protocol (RDP) session, in accordance with an example embodiment. The system 100 may be communicatively coupled with a remote identity provider device 102 and a card emulator device 104 via a communication network 108. Examples of the remote identity provider device 102 and the card emulator device 104 may comprise, but are not limited to, a camera, a scanner device, desktop, a laptop, a notebook, a tablet, a smartphone, a mobile phone, an application server, or the like. Further, examples of the remote identity provider device 102 and the card emulator device 104 may comprise, but are not limited to, a display device, a printer, a projector, a desktop, a laptop, a notebook, a tablet, a smartphone, a mobile phone, an application server, or the like. The remote identity provider device 102 and the card emulator device 104 are associated with different users. The user accesses the card emulator device during the remote desktop protocol (RDP) session. The card emulator device 104 may be further coupled to a remote hardware security module (HSM) server (112).

The communication network 108 may be wired, wireless, or any combination of wired and wireless communication networks, such as cellular, Wi-Fi, internet, local area networks, or the like. In one embodiment, the communication network 108 may comprise one or more networks such as a data network, a wireless network, a telephony network, or any combination thereof. It is contemplated that the data network may be any local area network (LAN), metropolitan area network (MAN), wide area network (WAN), a public data network (e.g., the Internet), short range wireless network, or any other suitable packet-switched network, such as a commercially owned, proprietary packet-switched network, e.g., a proprietary cable or fibre-optic network, and the like, or any combination thereof. In addition, the wireless network may be, for example, a cellular network and may employ various technologies comprising enhanced data rates for global evolution (EDGE), general packet radio service (GPRS), global system for mobile communications (GSM), Internet protocol multimedia subsystem (IMS), universal mobile telecommunications system (UMTS), etc., as well as any other suitable wireless medium, e.g., worldwide interoperability for microwave access (WiMAX), Long Term Evolution (LTE) networks, code division multiple access (CDMA), wideband code division multiple access (WCDMA), wireless fidelity (Wi-Fi), wireless LAN (WLAN), Bluetooth^{®}, Internet Protocol (IP) data casting, satellite, mobile ad-hoc network (MANET), and the like, or any combination thereof.

In one example embodiment, the remote identity provider device 102 configured to authenticate a user, and to generate an access token for secure operations to be performed by the user during the remote desktop protocol (RDP) session.

The card emulator device 104 comprises an intermediary mechanism 106 that is configured to manage a communication between one or more applications and the one or more smart cards present in the card emulator device, and a card emulator 110 communicably coupled with the intermediary mechanism 106.

The card emulator 110 is configured to receive a request from the one or more applications to access the one or more smart cards, the request is received in the form of application protocol data units (APDUs). The card emulator 110 is configured to translate the received APDUs to custom logic associated with one or more smart cards. Further the card emulator 110 hosts and manages instances associated with the one or more smart cards based on the custom logic to enable the usage of the one or more smart cards over the remote desktop protocol (RDP) session. The instances are managed through one or more card model plugins.

In one example embodiment, the intermediary mechanism 106 is a data definition language (DDL) file, or a custom Winscard.dll file.

In one example embodiment, the the card emulator 110 is implemented as a windows service.

In one example embodiment, the one or more applications are being accessed by the user remotely over the RDP.

In one example embodiment, the one or more smart cards are selected from any or a combination of a physical card or a virtual smart card.

In one example embodiment, the card emulator 110 communicates securely with a remote hardware security module (HSM) server 112 using an Inter-Process Communication (IPC) protocol to authenticate the user and the access token. Thereafter, enable the usage of the one or more smart cards over the remote desktop protocol (RDP) session.

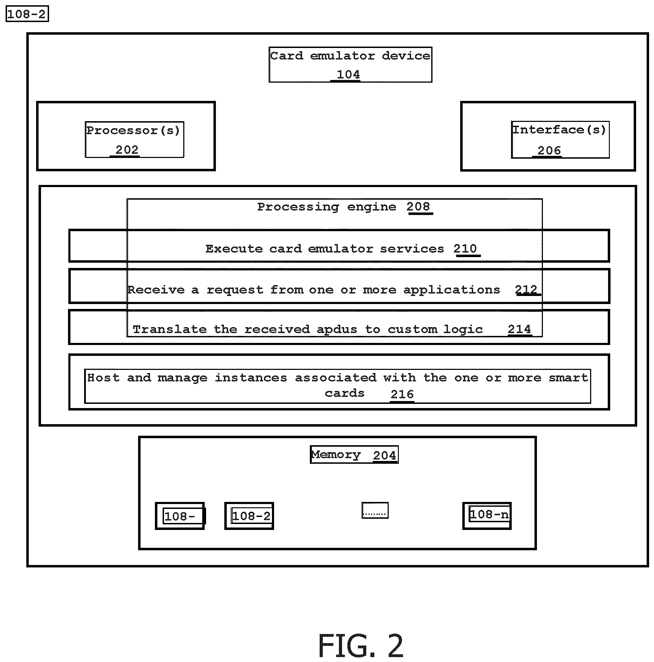

The card emulator device 104 may comprise a processor 202 and a memory (204) as shown in FIG. 2. The term "memory" used herein may refer to any computer-readable storage medium, for example, volatile memory, random access memory (RAM), non-volatile memory, read only memory (ROM), or flash memory. The memory (204) may comprise a Random-Access Memory (RAM), a Read-Only Memory (ROM), a Complementary Metal Oxide Semiconductor Memory (CMOS), a magnetic surface memory, a Hard Disk Drive (HDD), a floppy disk, a magnetic tape, a disc (CD-ROM, DVD-ROM, etc.), a USB Flash Drive (UFD), or the like, or any combination thereof.

The term "processor" used herein may refer to a hardware processor comprising a Central Processing Unit (CPU), an Application-Specific Integrated Circuit (ASIC), an Application-Specific Instruction-Set Processor (ASIP), a Graphics Processing Unit (GPU), a Physics Processing Unit (PPU), a Digital Signal Processor (DSP), a Field Programmable Gate Array (FPGA), a Programmable Logic Device (PLD), a Controller, a Microcontroller unit, a Processor, a Microprocessor, an ARM, or the like, or any combination thereof.

The processor 202 may retrieve computer program code instructions that may be stored in the memory for execution of the computer program code instructions. The processor may be embodied in a number of different ways. For example, the processor 202 may be embodied as one or more of various hardware processing means such as a coprocessor, a microprocessor, a controller, a digital signal processor (DSP), a processing element with or without an accompanying DSP, or various other processing circuitry having integrated circuits such as, for example, an ASIC (application specific integrated circuit), an FPGA (field programmable gate array), a microcontroller unit (MCU), a hardware accelerator, a special-purpose computer chip, or the like. As such, in some embodiments, the processor may comprise one or more processing cores configured to perform independently. A multi-core processor may enable multiprocessing within a single physical package. Additionally, or alternatively, the processor 202 may comprise one or more processors configured in tandem via the bus to enable independent execution of instructions, pipelining, and/or multithreading.

Additionally, or alternatively, the processor 202 may comprise one or more processors capable of processing large volumes of workloads and operations to provide support for big data analysis. In an example embodiment, the processor 202 may be in communication with the memory 204 via a bus for passing information among components of the system.

The memory 204 may be non-transitory and may comprise, for example, one or more volatile and/or non-volatile memories. In other words, for example, the memory 304 may be an electronic storage device (for example, a computer readable storage medium) comprising gates configured to store data (for example, bits) that may be retrievable by a machine (for example, a computing device like the processor). The memory 204 may be configured to store information, data, contents, applications, instructions, or the like, for enabling the apparatus to carry out various functions in accordance with an example embodiment of the present disclosure. For example, the memory 204 may be configured to buffer input data for processing by the processor 202.

The memory 204 may store instructions that, when executed by the processor 202, cause the system 100 to perform one or more operations of the present disclosure which will be described in greater detail in conjunction with FIG. 2.

FIG. 2 illustrates a block diagram illustrating a card emulator device 104 to enable usage of one or more smart cards over a remote desktop protocol (RDP) session, in accordance with an example embodiment. The system 102 comprises one or more processor(s) 202. The one or more processor(s) 202 are implemented as one or more microprocessors, microcomputers, microcontrollers, digital signal processors, central processing units, logic circuitries, and/or any devices that manipulate data based on operational instructions. Among other capabilities, one or more processor(s) 202 are configured to fetch and execute computer-readable instructions stored in a memory of the sink device. The memory 204 stores one or more computer-readable instructions or routines, which are fetched and executed to create or share the data units over a network service. Memory 204 comprises any non-transitory storage device comprising, for example, volatile memory such as RAM, or non-volatile memory such as EPROM, flash memory, and the like.

In an embodiment, the card emulator device 104 also comprises an interface(s) 206. The interface(s) 206 comprises a variety of interfaces, for example, interfaces for data input and output devices referred to as I/O devices, storage devices, and the like. The interface(s) 206 facilitates communication of the card emulator device (104) with various devices or servers coupled to the system 102. The interface(s) 206 also provides a communication pathway for one or more components of the card emulator device (104). Examples of such components comprise, but are not limited to, processing engine(s) and database. Interface 206 comprises a platform for communication with the devices/servers to read real-time data /write data in the card emulator device (104) and to communicate with the other devices. Interfaces 206 comprise a Graphical interface that allows user to feed inputs, to type/write/ upload the data and certificates, and other software and hardware interfaces, for example, interfaces for peripheral device(s), such as a keyboard, a mouse, an external memory, and a printer.

In an embodiment, the processing engine(s) 208 are implemented as a combination of hardware and programming (for example, programmable instructions) to implement one or more functionalities of the processing engine(s) 208. In the examples described herein, such combinations of hardware and programming may be implemented in several different ways. For example, the programming for the processing engine(s) 208 are processor-executable instructions stored on a non-transitory machine-readable storage medium, and the hardware for the processing engine(s) comprises a processing resource (for example, one or more processors), to execute such instructions. In the present examples, the machine-readable storage medium stores instructions that, when executed by the processing resource, implement the processing engine(s). In such examples, the card emulator device 104 comprises the machine-readable storage medium storing the instructions and the processing resource to execute the instructions, or the machine-readable storage medium may be separate but accessible to the user device and the processing resource. In other examples, the processing engine(s) 208 is implemented by electronic circuitry. Database 210 comprises data that is either stored or generated as a result of functionalities implemented by any of the components of the processing engine(s) 208.

In an exemplary embodiment, the processing engine 208 may comprise one or more engines (set of instructions) such that the processor, upon executing such instructions, is configured to execute 210 card emulator services. Further, the processing engine 208 receives 212 a request from one or more applications to access the one or more stored smart cards, the request is received in the form of application protocol data units (APDUs). Furthermore, the processing engine 208 translates 214 the received APDUs to custom logic associated with one or more smart cards. Additionally, the processing engine 208 hosts and manages 216 instances associated with the one or more smart cards based on the custom logic thereby enabling the usage of the one or more smart cards over the remote desktop protocol (RDP) session, wherein the instances are managed through one or more card model plugins.

In one example embodiment, the processor 202 is further configured to communicate with a remote identity provider device 102. The remote identity provider device 102 is configured to authenticate a user, and to generate an access token for secure operations to be performed by the user during the remote desktop protocol (RDP) session.

In one example embodiment, the processor 202 is further configured to communicate securely with a remote hardware security module (HSM) server 112 using an Inter-Process Communication (IPC) protocol to authenticate an identity of the user and the access token, to thereby, upon authentication, enable the usage of the one or more smart cards over the remote desktop protocol (RDP) session.

In one example embodiment, the processor 202 is communicably coupled to an intermediary mechanism 106.The intermediary mechanism 106 is configured to manage communication between the one or more applications and the one or more smart cards.

In one example embodiment, the intermediary mechanism 106 is a data definition language (DDL) file, or a custom Winscard.dll file.

In one example embodiment, the card emulator 110 is implemented as a windows service.

In one example embodiment, the one or more smart cards are selected from any or a combination of a physical card or a virtual smart card.

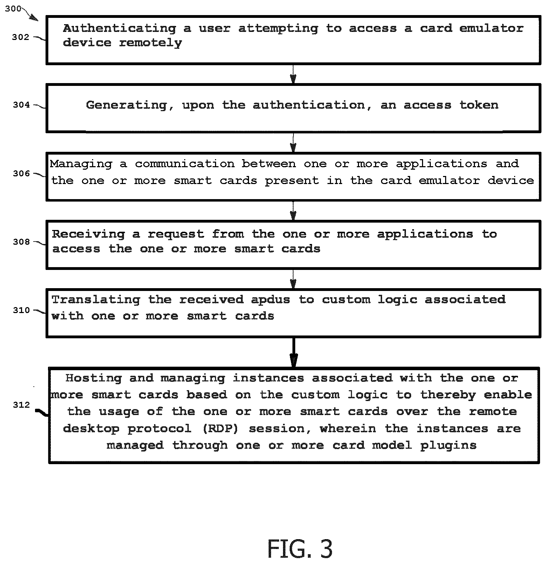

FIG. 3 illustrates a flow diagram 300 of the method for simulating realistic degraded images, in accordance with an example embodiment. It will be understood that each block of the flow diagram of the method 300 may be implemented by various means, such as hardware, firmware, processor, circuitry, and/or other communication devices associated with execution of software comprising one or more computer program instructions. For example, one or more of the procedures described above may be embodied by computer program instructions. In this regard, the computer program instructions which embody the procedures described above may be stored by a memory 204 of the card emulator device 104, employing an embodiment of the present disclosure and executed by a processor 202 of the card emulator device 104.

As will be appreciated, any such computer program instructions may be loaded onto a computer or other programmable apparatus (for example, hardware) to produce a machine, such that the resulting computer or other programmable apparatus implements the functions specified in the flow diagram blocks. These computer program instructions may also be stored in a computer-readable memory that may direct a computer or other programmable apparatus to function in a particular manner, such that the instructions stored in the computer-readable memory produce an article of manufacture the execution of which implements the function specified in the flowchart blocks. The computer program instructions may also be loaded onto a computer or other programmable apparatus to cause a series of operations to be performed on the computer or other programmable apparatus to produce a computerimplemented process such that the instructions which execute on the computer or other programmable apparatus provide operations for implementing the functions specified in the flow diagram blocks. Accordingly, blocks of the flow diagram support combinations of means for performing the specified functions and combinations of operations for performing the specified functions for performing the specified functions. It will also be understood that one or more blocks of the flow diagram, and combinations of blocks in the flow diagram, may be implemented by special purpose hardware-based computer systems which perform the specified functions, or combinations of special purpose hardware and computer instructions

The method 300 is implemented by the card emulator device 104. At step 302, the method 300 comprises authenticating a user attempting to access a card emulator device remotely.

The remote identity provider device authenticates a user by communicating with a remote identity provider device, and thereby generates an access token for secure operations to be performed by the user during the remote desktop protocol (RDP) session.

The remote identity provider device further communicates securely with a remote hardware security module (HSM) server using an Inter-Process Communication (IPC) protocol to authenticate an identity of the user and the access token, to thereby, upon authentication, enable the usage of the one or more smart cards over the remote desktop protocol (RDP) session.

In an example embodiment, the intermediary mechanism is a data definition language (DDL) file, or a custom Winscard.dll file.

In an example embodiment, the card emulator is implemented as a windows service.

At step 304, the method 300 comprises generating, upon the authentication, an access token for secure operations to be performed by the user during the remote desktop protocol (RDP) session while accessing the card emulator device.

At step 306, the method 300 comprises managing a communication between one or more applications and the one or more smart cards present in the card emulator device.

At step 308, the method 300 comprises receiving a request from the one or more applications to access the one or more smart cards, the request is received in the form of application protocol data units (APDUs).

At step 310, the method 300 comprises translating the received APDUs to custom logic associated with one or more smart cards.

At step 312 the method 300 comprises hosting and managing instances associated with the one or more smart cards based on the custom logic to thereby enable the usage of the one or more smart cards over the remote desktop protocol (RDP) session. The instances are managed through one or more card model plugins

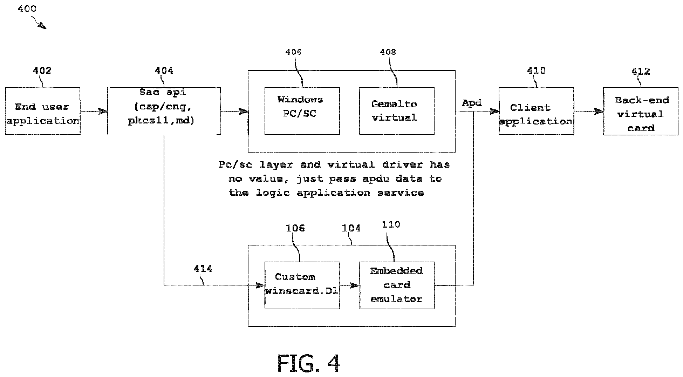

FIG. 4 illustrates an exemplary integration 400 between identity providers for user authentication, and remote HSM servers for cryptographic operations, in accordance with an example embodiment.

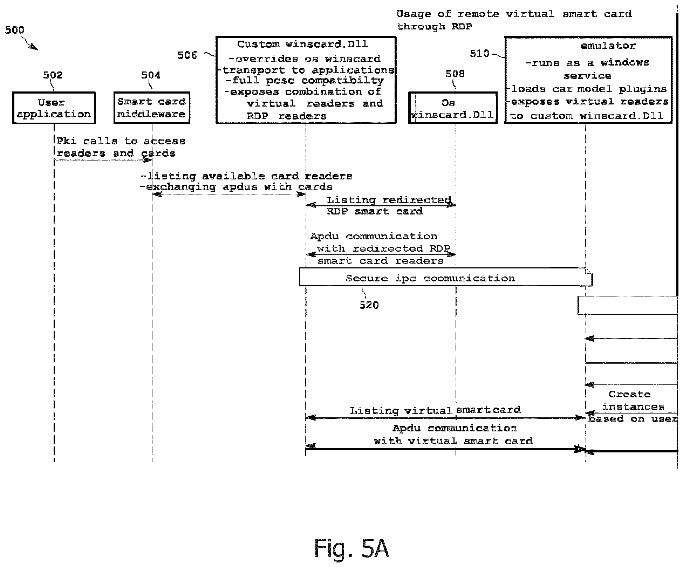

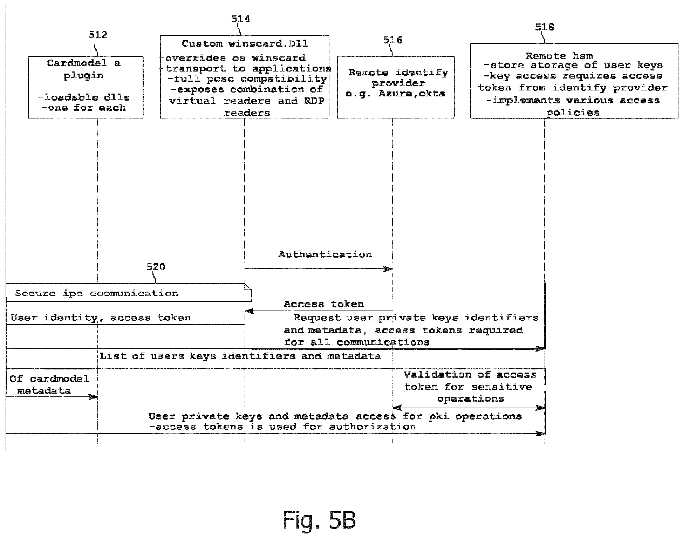

FIG. 5A and 5B (continuation of FIG. 5A) illustrate an exemplary real-world application scenario 500, such as, using a virtual smart card for signing documents in Acrobat, and performing secure authentication in a browser, in accordance with an example embodiment.

As shown in FIG. 4 and FIG. 5A and 5B, the invention revolves around using virtual smart cards in a Windows machine while connecting remotely to it through Remote Desktop Protocol (RDP).

As mentioned in FIG. 4 an End User Application 402 interacts with a SAC API (CAP/CNG, PKCS11, MD) 404 for initiating a remote access. The SAC API 404 refers to the cryptographic APIs or tools provided by a Secure Access Card (SAC) system or Smart Access Card infrastructure. Further, CAP/CNG (Cryptography API: Next Generation) may be utilized by SAC API 404 for cryptographic operations on Windows systems. Also, SAC API 404 supports PKCS#11 to interface with cryptographic hardware like smart cards or HSMs. Furthermore, the SAC API 404 might use cryptographic hash functions such as Message Digest MD.

In a conventional operation, request for remote access passes through a Windows PC/SC 406 and a Gemalto Virtual Driver 408 in form of a APDU to a Client Application 410. Further, the Client Application 410 contacts the Back-end Virtual Card Server 412 to complete remote access request.

However, the invention routes the request for remote access through a Custom Winscard.dll 106 and an Embedded Card Emulator 110 in form of a APDU to a Client Application 410. Further, the Client Application 410 contacts the Back-end Virtual Card Server 412 to complete remote access request. Thus, the invention cures the deficiency in the conventional operation.

Due to a Windows limitation, applications running on Windows cannot access local smart cards (physical or virtual) when users connect through RDP. To mitigate the issue, that the invention enables applications on Windows to utilize virtual smart card readers even if the user is connecting through RDP.

Below are the details about the various components of our solution, where innovation lies in: Custom Winscard.dll, Card Emulator, and Card Model Plugin.

Remote Identity Provider: An identity provider like Azure or Okta is responsible for providing identity management to users. Further, the provider authenticates users and defines the user's access policies (e.g., which operations users are allowed to perform).

Users' credentials (e.g., username/password) will be used to authenticate themselves with the identity provider. Once authentication is complete, an access token is generated for the user, which is used by the user to access other services.

Remote HSM Server: A remote server where a connected Hardware Security Module (HSM) is responsible for storing users' private keys, certificates, and metadata. The remote server can be accessed through queries (e.g., REST API) to perform operations using the keys or return certificate and metadata. The access is authorized based on the provided access token checked by the Identity Provider.

Management application (running on Windows machine): The application provides the necessary interface for users to authenticate themselves with the Identify Provider in order to obtain an access token. Further, the application is responsible for communicating with the Card Emulator service to perform various actions related to the user's virtual cards, such as but not limited to managing virtual card instances for each card model, connecting/disconnecting virtual cards, other virtual card administrative operations.

The management application uses the user's identity and user's access token when asking the Card Emulator to perform actions. Communication between the Management Application and the Card Emulator service is done by using a secure Inter-Process Communication (IPC) mechanism.

Card Model Plugin: A shared library that implements the logic of a specific smart card model, which can be emulated by the Card Emulator. The Card Emulator loads the Card Model Plugins' shared library to implement the functionality of a virtual smart card, enabling it to process APDUs received from applications and return adequate responses, and provide a virtual card file and data mapping using token metadata retrieved from the remote HSM server. Further, the Card Emulator provides updated metadata that needs to be sent to the remote HSM server.

Card Emulator: Implemented as a Windows service running in the background providing three main functions such as but not limited to, responding to actions sent from the management application, instantiating virtual card instances using card model plugins, creating and managing virtual smart card readers that may be used by applications through custom Winscard.dll, channelling APDUs and their responses between virtual readers and its associated virtual card instance. Further, the Card Emulator's function also comprise sending queries to the Remote HSM Server ser identity and sending access token with the query to make the remote HSM Server authorize it.

In an example, the queries may be selected from, but are not limited to, list keys and certificates belonging to the user.

Custom Winscard.dll: A shared library is used as a replacement for Windows' winscard.dll. The shared library provides the same entry points as the OS winscard.dll and provides full PC/SC functionality, transparently for applications instead of Windows' built-in winscard.dll. This custom Winscard dll exposes virtual smart card readers in addition to the smart card readers returned by Windows' winscard.dll. The function SCardListReaders may return a list of readers that is a merge between Windows' winscard.dll readers and the custom list of virtual readers, tracking functions like SCardGetStatusChange and SCardStatus handle both virtual reader and Windows' winscard dll readers. Further, the shared library provides communication functions like SCardConnect and SCardTransmit handle both virtual reader and Windows' winscard dll readers.

The custom Winscard.dll communicates with the Card Emulator service through a secure IPC mechanism to retrieve information about available virtual smart card readers and send APDUs received from applications. The APDU Responses received from the Card Emulator service will be forwarded to the APDU originating application.

Applications that use the custom Winscard.dll (either directly by calling PC/SC or indirectly through a smart card middleware) will perform as if all readers returned by the custom Winscard.dll are local smart card readers, even if users are connected to the machine using RDP.

Smart Card Middleware: A smart card middleware like company's SAC middleware provides libraries that implement standard cryptographic interfaces to integrate smart card capabilities into the operating system and third-party applications.

Under Windows, a smart card middleware provides PKCS#11 libraries, Crypto API, and/or CNG modules tightly integrated into the Windows Public Key Infrastructure (PKI) architecture, allowing seamless use of smart card capabilities by applications. The smart card middleware uses Windows' winscard.dll to interact with smart cards.

By enabling the smart card middleware to use the custom Winscard.dll instead of Windows' built-in one, the middleware will continue to provide the same functionality while supporting virtual smart card readers that cannot be supported by Windows' winscard.dll under RDP connections.

User Application: A User application can be any application that requires performing operations using a smart card. For example, Chrome browser or Acrobat that perform TLS mutual authentication or signature operations. Such applications usually use a smart card middleware to perform their operations and so integrating our new solution is completely transparent to them.

The salient feature is that the user application and smart card middleware do not require any changes to support virtual smart cards on Windows under RDP. They will perform in the same way regardless of whether they are connecting through RDP or not.

As shown in FIG. 5A and FIG. 5B (continuation of FIG. 5A) the User Application 502 using the PKI calls to access readers and cards contacts the Smart Card Middleware 504. Further, interaction between the Custom Winscard.dll 506 and the Smart Card Middleware 504 comprises listing available card readers and exchanging APDUs with cards. Also, the Custom Winscard dll 506 interacts with OS Winscard dll 508 by listing redirected RDP smart card readers and communicating APDU with redirected RDP smart card readers.

The Custom Winscard dll 506 provides a secure IPC communication with a Card Emulator 510. Further, Custom Winscard dll 506 and Card Emulator 510 interact by listing virtual smart card readers and communicating APDU with virtual smart card readers.

The Card Emulator 510 connects to a CardModel A Plugin 512 by creating instance of CardModel A based on user metadata. Also, Card Emulator 510 creates a Secure IPC communication 520 with a Management Application 514 which provides user identity and access token to the Card Emulator 510.

In FIG. 5B, the Management Application 514 requests authentication from a Remote Identity Provider 516 which provides a success token to the Management Application 514. Further, validation of access token for sensitive operations are carried out between the Remote Identity Provider 516 and the Remote HSM Server 518.

The Card Emulator 510 requests user private keys, identifiers and metadata from the HSM Server 518. In response, the HSM Server 518 provides a list of user keys, identifiers and metadata to the Card Emulator 510. Additionally, the HSM Server 518 and the Card Emulator interact by exchanging user Private Keys and metadata access for PKI operations.

Many modifications and other embodiments of the inventions set forth herein will come to mind to one skilled in the art to which these inventions pertain having the benefit of the teachings presented in the foregoing descriptions and the associated drawings. Therefore, it is to be understood that the inventions are not to be limited to the specific embodiments disclosed and that modifications and other embodiments are intended to be fall within the scope of the appended claims. Moreover, although the foregoing descriptions and the associated drawings describe example embodiments in the context of certain example combinations of elements and/or functions, it should be appreciated that different combinations of elements and/or functions may be provided by alternative embodiments without departing from the scope of the appended claims. In this regard, for example, different combinations of elements and/or functions than those explicitly described above are also contemplated as may be set forth in some of the appended claims. Although specific terms are employed herein, they are used in a generic and descriptive sense only and not for purposes of limitation.

It is to be understood that the above description is intended to be illustrative, and not restrictive. For example, the above-discussed embodiments may be used in combination with each other. Many other embodiments will be apparent to those of skill in the art upon reviewing the above description.

With respect to the use of substantially any plural and/or singular terms herein, those having skill in the art can translate from the plural to the singular and/or from the singular to the plural as is appropriate to the context and/or application. The various singular/plural permutations may be expressly set forth herein for sake of clarity.

The benefits and advantages which may be provided by the present disclosure have been described above with regard to specific embodiments. These benefits and advantages, and any elements or limitations that may cause them to occur or to become more pronounced are not to be construed as critical, required, or essential features of any or all of the embodiments.

While the present disclosure has been described with reference to particular embodiments, it should be understood that the embodiments are illustrative and that the scope of the invention is not limited to these embodiments. Many variations, modifications, additions, and improvements to the embodiments described above are possible. It is contemplated that these variations, modifications, additions, and improvements fall within the scope of the invention.

## Claims

1. A smart card management (SCM) system (100) to enable usage of one or more smart cards over a remote desktop protocol (RDP) session, the SCM system comprising:
a remote identity provider device (102) configured to authenticate a user, and to generate an access token for secure operations to be performed by the user during the remote desktop protocol (RDP) session;
a card emulator device (104) communicably coupled to the remote identity provider device (102), wherein the user accesses the card emulator device (104) during the remote desktop protocol (RDP) session, and the card emulator device (104) having:
an intermediary mechanism (106) configured to manage a communication between one or more applications and the one or more smart cards (108-1, 108-2,...., 108-N) present in the card emulator device;
a card emulator (110) communicably coupled with the intermediary mechanism, wherein the card emulator (110) configured to:
receive a request from the one or more applications to access the one or more smart cards wherein the request is received in the form of application protocol data units (APDUs);
translate the received APDUs to custom logic associated with one or more smart cards; and
host and manage instances associated with the one or more smart cards based on the custom logic to thereby enable the usage of the one or more smart cards over the remote desktop protocol (RDP) session, wherein the instances are managed through one or more card model plugins.

2. The SCM system (100) according to claim 1, wherein the intermediary mechanism is a data definition language (DDL) file, or a custom Winscard.dll file.

3. The SCM system (100) according to claim 1, wherein the card emulator (110) is implemented as a windows service.

4. The SCM system (100) according to claim 1, wherein the one or more applications are being accessed by the user remotely over the RDP.

5. The SCM system (100) according to claim 1, wherein the one or more smart cards are selected from any or a combination of a physical card or a virtual smart card.

6. The SCM system (100) according to claim 1, wherein the card emulator communicates securely with a remote hardware security module (HSM) server (112) using an Inter-Process Communication (IPC) protocol to authenticate an identity of the user and the access token, to thereby, upon authentication, enable the usage of the one or more smart cards over the remote desktop protocol (RDP) session.

7. A card emulator device (104) to enable usage of one or more smart cards over a remote desktop protocol (RDP) session, the card emulator device (104) comprising:
a memory (204) for storing one or more instructions for emulating one or more functionalities associated with the one or more smart cards (108-1, 108-2,...., 108-N); and
a processor (202) communicably coupled with the memory, the processor configured to:
execute (210) card emulator services;
receive (212) a request from one or more applications to access the one or more stored smart cards wherein the request is received in the form of application protocol data units (APDUs);
translate (214) the received APDUs to custom logic associated with one or more smart cards; and
host and manage (216) instances associated with the one or more smart cards based on the custom logic to thereby enable the usage of the one or more smart cards over the remote desktop protocol (RDP) session, wherein the instances are managed through one or more card model plugins.

8. The card emulator device (104) according to claim 7, wherein the processor (202) is further configured to:
communicate with a remote identity provider device (102), the remote identity provider device is configured to authenticate a user, and to generate an access token for secure operations to be performed by the user during the remote desktop protocol (RDP) session; and
communicate securely with a remote hardware security module (HSM) server (112) using an Inter-Process Communication (IPC) protocol to authenticate an identity of the user and the access token, to thereby, upon authentication, enable the usage of the one or more smart cards over the remote desktop protocol (RDP) session.

9. The card emulator device (104) according to claim 7, wherein the processor (202) is communicably coupled to an intermediary mechanism (106) wherein the intermediary mechanism (106) is configured to manage communication between the one or more applications and the one or more smart cards.

10. The card emulator device (104) according to claim 7, wherein the intermediary mechanism (106) is a data definition language (DDL) file, or a custom Winscard.dll file.

11. The card emulator device (104) according to claim 7, wherein the card emulator (110) is implemented as a windows service.

12. The card emulator device (104) according to claim 7, wherein the one or more smart cards are selected from any or a combination of a physical card or a virtual smart card.

13. A method (300) for enabling usage of one or more smart cards over a remote desktop protocol (RDP) session, the method comprising:
authenticating (302) a user attempting to access a card emulator device remotely;
generating (304), upon the authentication, an access token for secure operations to be performed by the user during the remote desktop protocol (RDP) session while accessing the card emulator device;
managing (306) a communication between one or more applications and the one or more smart cards present in the card emulator device;
receiving (308) a request from the one or more applications to access the one or more smart cards, the request is received in the form of application protocol data units (APDUs);
translating (310) the received APDUs to custom logic associated with one or more smart cards; and
hosting and managing (312) instances associated with the one or more smart cards based on the custom logic to thereby enable the usage of the one or more smart cards over the remote desktop protocol (RDP) session, wherein the instances are managed through one or more card model plugins.

14. The method (300) according to claim 13, wherein the method further comprising:
communicating with a remote identity provider device, the remote identity provider device is configured to authenticate a user, and to generate an access token for secure operations to be performed by the user during the remote desktop protocol (RDP) session; and
communicating securely with a remote hardware security module (HSM) server using an Inter-Process Communication (IPC) protocol to authenticate an identity of the user and the access token, to thereby, upon authentication, enable the usage of the one or more smart cards over the remote desktop protocol (RDP) session.

15. The method (300) according to claim 13, wherein the intermediary mechanism is a data definition language (DDL) file, or a custom Winscard.dll file, and wherein the card emulator is implemented as a windows service.
